# EUROPEAN PATENT APPLICATION

(11) **EP 2 498 441 A1**
(43) Date of publication of application: **12.09.2012**
(21) Application number: 11157585.8
(22) Date of filing: 10.03.2011
(51) Int. Cl.: H04L 12/24, H04L 29/08, H04W 24/08

(54) **A method and system for determining quality of experience**

(71) Applicant: Swiss Mobility Solutions, 2036 Cormondrèche (CH)
(72) Inventor: Angel Román García, Miguel, 03560 El Campello Alicante (ES); Andrés Sanchís Pérez, Francisco, 03410 Biar Alicante (ES)
(74) Representative: P&TS SA (AG, Ltd.)

(57) **Abstract**

A method for determining the quality of experience experienced by a user of a wireless telecommunication network, comprising the steps of, providing a user equipment having a processor unit arranged to execute an operating system, and a wireless network device connected to the user equipment; providing a communication manager software executable by the user equipment containing software code to manage the wireless network device; providing a filter driver for the operating system, wherein the filter driver is configured to intercept data which is being communicated between the communication manager software and the wireless network device; determining said quality of experience based on the wireless networks performance data intercepted by the filter driver transparently to the communication manager software which may make exclusive use of the communication channels.

## Description

### Field of the Invention:

The present invention relates to a method and system for determining quality of experience. In particular, but not exclusively, the present invention relates to a method and system for determining quality of experience experienced by a user of a wireless telecommunication network.

### Background to the Invention:

Quality of Experience (QoE) is a measure of a customer's experiences using mobile services. QoE takes into account the needs and the desires of the subscribers when using a mobile service. For example an operator may provide reliable data services corresponding to high Quality of Service values, (QoS), but the users may still perceive a low QoE. Some examples which can impact a subscribers' Quality of Experience include:
- The operator's radio network; this can greatly influence QoE through factors such as the coverage of the operator's network, handovers that affect network performance, radio capacity, etc. One example of a measure of the operator's radio network is the frequency of dropped connections or call.
- The devices or terminals that the subscribers are using to connect to the services (such as a Blackberry Handset or a USB Modem); this includes the speed of the device, the radio accessibility, the device software, etc. It is also useful for operators to know what types of devices are using their networks in order to maximize QoE.
- The user interface; the lack of user-friendly interfaces to access services can seriously affect QoE. Also a poor web portal design can have a negative effect. With user-friendly interfaces, QoE can be improved by being more accessible, easy to navigate, and aesthetically pleasing.
- The content on the operator's network; the relevancy of the content, the packaging, the importance, the quality of the content, and the existence of tailored content all can effect on subscriber's QoE.
- The operator's application; this may include content servers and streaming servers. The connection to these servers and the amount of them on the network can influence QoE. For example, if the content servers are in low supply, then this will result in long delay times during peak usage times which can lower QoE.
- Provisioning for web browsing, MMS, and streaming settings can affect user QoE when utilizing these services. Provisioning errors in these services can in certain cases prevent users from using the provisioning.
- Network security can also be a big influence on QoE, especially regarding Virus proliferation with MMS as well as hacking attempts while using the operator's services.

The influence of the network access on mobile broadband QoE, when it comes to data services is even more critical. Examples of critical factors that can degrade mobile data services and therefore decrease the QoE, include; network access, radio parameters such as the ratio of technology usage (2G vs 3G), interference, power, codes utilisation, retransmissions, etc. The user equipment configuration also impacts on mobile broadband QoE; for example, varying Operating Systems between users and varying laptop settings between users e.g. TCP Windows Size, MTU, Anti Virus, etc. influence the end user's perceived experience.

It is the objective of the present invention to provide a method which can be used to collect mobile broadband view.

It is a further objective of the present invention to provide mobile broadband operators with a means to monitor and understand end user's QoE.

Existing methods and systems for determining the quality of experience experienced by a user of a wireless telecommunication network require active monitoring. Active monitoring usually involves carrying out dedicated and intrusive testing of the wireless telecommunication network in order to test the quality likely to be experienced by a user of the wireless telecommunication network. Disadvantageously, these dedicated tests are usually complex and do not accurately reflect the perceived quality of experience by an end user. For example it is possible to test whether a particular host is reachable across an Internet Protocol (IP) network, by measuring the round-trip time for packets sent from the local host to a destination computer.

Furthermore, these dedicated tests for determining the quality of experience cannot be carried out while the user is using the wireless telecommunication network and, in any case they use up part of the available network resources, thus the results of the tests will not accurately reflect the actual quality of experience experienced by the user when using the wireless telecommunication network.

It is a further objective of the present invention to obviate or mitigate one or more of the aforementioned disadvantages.

### Summary of the Invention:

According to a first aspect of the present invention there is provided a method for determining the quality of experience experienced by a user of a wireless telecommunication network, comprising the steps of,
providing a user equipment having a processor unit arranged to execute an operating system, and a wireless network device connected to the user equipment;
providing a communication manager software executable by the user equipment containing software code to manage the wireless network device;
providing a filter driver for the operating system, wherein the filter driver is configured to intercept data which is being communicated between the communication manager software and the wireless network device;
providing a monitor software at user level to measure quality of experience;
providing a device driver, responsible for the interaction between the operating system and the wireless network device;
determining said quality of experience based on the data intercepted by the filter driver.

Interception of data by the filter driver may be carried out by redirecting the data. Interception of data by the filter driver may be carried out by viewing or reading and/or making a copy of the viewed or read data.

The communication manager software may be part of the operating system.

The communication manager software reads and writes data to communication channels.

The communication manager software may be a dashboard software application running in the operating system.

The communication channels may comprise serial ports, network adapters and/or bluetooth ports.

The filter driver may be configured to intercept data which is being communicated between the communication manager software and a device driver.

The filter driver may be configured to intercept data which is being communicated between the device driver and the wireless network device.

Preferably, the data which is intercepted by the filter driver is one or more commands. These commands may be AT commands.

Preferably, the filter driver is configured to intercept data which is being communicated between a device driver and a wireless network device.

The filter driver may be configurable to operate in at least one of the following modes; by-pass mode; IP traffic monitor mode; monitor mode; diagnostic mode; double by-pass mode; full pass-through mode.

The filter driver may be provided between the communication manager software and a device driver of the wireless network device, to enable the filter driver to intercept data which is being communicated between the communication manager software and the device driver of a wireless network device.

The above-mentioned method relies on the data communicated between the communication manager software and the one or more communication channels in order to determine the quality of experience. The data communicated between the communication manager software and the wireless network device is intercepted. The intercepted data is passed to the monitor software and may be used to determine the quality of experience in a transparent mode to the communication manager software.

After the commands between the communication manager software and the device driver are intercepted, they are monitored and then they may be passed on to their destination or may be blocked and a response sent to the communication manager software. Thus, the method is transparent to the communication manager software as from the point of view of the communication manager software data is being sent and response received as normal. The transparency of the method allows the method to be executed while the wireless network device is in use; for example the quality of experience may be determined while the user is browsing to the internet. Accordingly, the determined quality of experience will accurately reflect the quality of experience experienced by the end user.

Furthermore, the method of the present invention obviates the need for active monitoring involving dedicated testing, or for modification of the user generated traffic, in order to determine the quality of experience. The method can determine the quality of experience using solely the user generated traffic and therefore determines it in a passive manner. This passive manner enables determining accurately the quality of experience from a customer centric point of view, in an environment which requires exclusive use of the wireless network device.

The method may further comprise the step of providing a filter driver at kernel level. The filter driver may be an nxfilter.

The method may further comprise the step of providing a monitor software at user level. The method may further comprise the step of passing the intercepted data from the filter driver to the monitor software. The monitor software may be an nxmonitor.

The filter driver may intercept data which is being communicated between the communication manager software and the wireless network device, during a service selected from the group of services comprising; HTTP web browsing; video streaming; audio streaming; file upload; file download; email; Peer to Peer, just to mention the most popular protocols and services in use.

The filter driver may be operable to filter, intercept, read, view, and/or copy data communicated between the communication manager software and one or more wireless network devices. The filtered data may be directed to a monitor software so that the quality of experience experienced by a user of a wireless telecommunication network can be determined transparently to the end user.

The filter driver may be configured to provide a monitor software with a real-time summary of traffic which has passed through one or more communication channels.

The filter driver may further comprise one or more virtual ports. Preferably, the filter driver comprises a set of virtual ports for each communication channel of the user equipment. Preferably, the one or more ports comprise a DevPort, AuxPort, NetPort and CtlPort. The DevPort may be operable to monitor the wireless network device communication. The AuxPort may be operable to monitor the communication manager communication. The NetPort may be operable to receive traffic information. The CtlPort may be operable to receive information regarding changes in the wireless network device, for example, that the wireless network device has been added or removed, or that the wireless network device is online or offline.

The architecture may further comprise a monitor software at user level. The monitor software may be configured to monitor the data sent to it by the filter driver. In doing so the monitor software will monitor the wireless network device's activity. The monitor software can monitor the data intercepted, read, viewed, and/or copied by the filter driver. The filter driver may be configured to pass intercepted, read, viewed, and/or copied data to a monitor software which can monitor the intercepted data.

The monitor software may be further configured to determine whether the intercepted data should be passed, unaltered, to the wireless network device. The monitor software may be further configured to determine whether AT commands should be added in a harmonized mode, to the intercepted data.

The monitor software may be further configured to configure the filter driver to operate in various modes of operation. For example, monitor software may be configured to configure the filter driver to operate in a diagnostic mode; by-pass mode; IP traffic monitor mode; monitor mode; double by-pass mode; or full pass-through mode. The monitor software may be configured so that it can configure the filter driver to be in various modes by using selected virtual ports on the filter driver.

The communication manager software may block all the communication channels of the user equipment, which may have exclusive access. As the monitor software will require access to the same communication channels while the communication manager software is running, this limitation must be overcome in a manner which is transparent to the communication manager software. The filter driver may be configured to implement switching mode so that the monitor software can access exclusive communication channels which may be blocked by the communication manager software.

The monitor software may be configured to simulate device responses to communication manager software.

The monitor software may be configured to log at least some of the data which the filter driver intercepts. Preferably, the monitor software is configured to log all of the data which the filter driver intercepts.

The monitor software may be configured to upload logged data to a server. Preferably, the monitor software is configured to upload logged data to an NxRay server.

A communication protocol between the monitor software and the server may be needed. The monitor software may be configured to leverage device Internet connection to communicate with a server.

The system may further comprise a server module which is capable of collecting, organizing and displaying information generated by the monitor software.

### Brief Description of the Drawings:

An embodiment of the invention will now be described by way of example only, with reference to the accompanying drawings in which,
Figure 1 shows the architecture of a system according to one embodiment of the present invention;
Figure 2 illustrates the system of figure 1 when in full pass-through operation mode;
Figure 3 illustrates the system of figure 1 when in IP traffic monitor operation mode;
Figure 4 illustrates the system of figure 1 when in bypass operation mode;
Figure 5 illustrates the system of figure 1 when in double bypass operation mode;
Figure 6 illustrates the system of figure 1 when in emulation mode.

### Detailed Description of the Drawing:

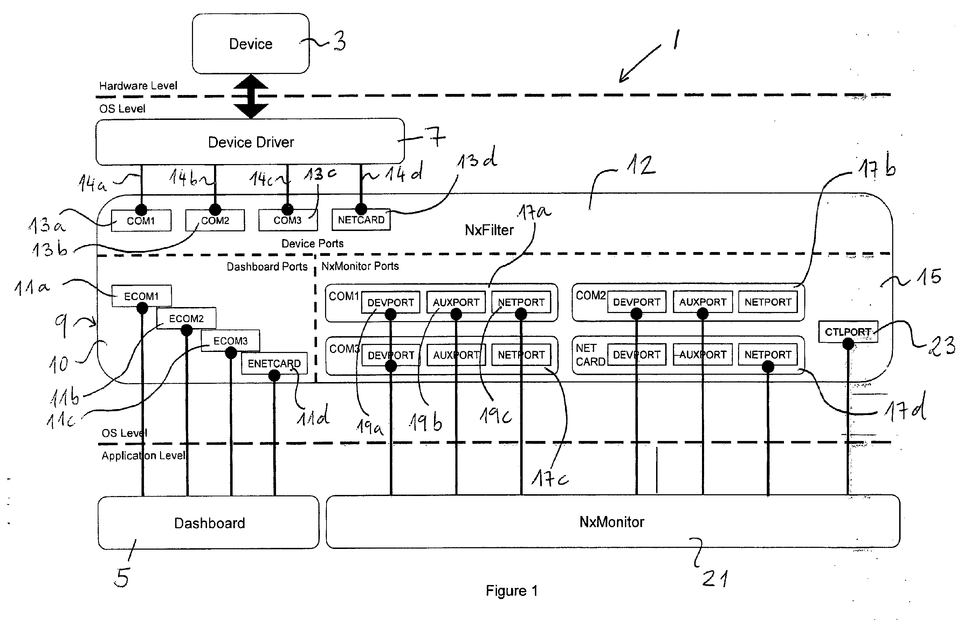

Figure 1 shows the architecture of a system 1 which is capable of determining the quality of experience experienced by a user of a wireless telecommunication network.

The system 1 comprises a wireless network device 3 (for example a USB modem) which is connected to a user equipment (for example a laptop) (not shown). The wireless network device 3 is connected to the user equipment via an external port (not shown). The user equipment will further comprise a processor unit (not shown) which is arranged to execute an operating system.

The system 1 shown in figure 1 comprises a communication manager software in the form of a dashboard5. In this particular embodiment the dashboard5 is in the form of a software application in an operating system. The dashboard 5 is configured to manage the wireless network device 3 by means of AT commands. Commands generated in the dashboard 5 are communicated to the wireless network device 3 via a device driver 7. These commands are usually to tell the device driver to operate the network device 3 to carry out a task (e.g connect to the internet). It should be noted that the present invention is not limited to having a dashboard 5, other forms of communication manager software could be used.

The device driver 7 provides communication channels (14a, 14b 14c), through which the dashboard 5 may communicate with the device driver 7. It should be understood that the communication channels (14a,14,b14c) are not limited to being "real"; the communication channels (14a,14,b14c) may be virtual channels. Each of these communication channels (14a, 14b 14c) is associated with an external port on the user equipment.

When the device driver 7 opens a communication channel (14a, 14b 14c) the dashboard 5 is permitted to communicate with a wireless network device 3 which is connected to an external port in the user equipment which is associated with that communication channel (14a, 14b 14c). The device driver 7 is therefore operable to permit selective operation of a wireless network device 3 which is connected to any external port in the user equipment.

An NxFilter 12 is interposed between the dashboard module 5 and the device driver 7. The NxFilter 12 may be configured to intercept data (e.g. commands) which is being communicated between the dashboard module 5 and the device driver 7. Intercepting data which is being communicated includes redirecting said data, reading said data, viewing said data, and/or making a copy of said data.

Data which is intercepted in a manner which is completely transparent to the dashboard module 5 and device driver 7 may be used to determine the quality of experience experienced by a user of a wireless telecommunication network.

The NxFilter 12 is in communication with an NxMonitor 21. Commands sent by the dashboard 5 and which are destined for the device driver 7 will pass through the NxFilter 12. Depending on the mode the NxFilter 12 is in, it may or may not intercept these commands. Intercepted commands may be sent to the NxMonitor 21.

The NxFilter 12 comprises four dashboard ports 11 a-11 d by means of which it receives data coming from the dashboard 5. The NxFilter further comprises four device ports 13a-13d by means of which data can be sent from the NxFilter 12 to the communication channels (14a, 14b 14c) which are provided by the device driver 7. The NxFilter further comprises four NxMonitor ports 17a-17d by means of which data can be communicated between the NxFilter 12 and the NxMonitor 21.

Each of the NxMonitor ports 17a-17d comprises three virtual serial ports 19a-19c. Serial port 19a is a DevPort which is operable to send and receive communication from the device driver 7 or the wireless network device 3. Serial port 19b is an AuxPort which is operable to send and receive communication to and from the dashboard 5. Serial port 19c is a NetPort which is operable to receive Internet Protocol traffic information.

The Nxfilter 21 can be configured to operate in many different modes. The mode in which the Nxfilter 21 is configured depends on which of the virtual serial ports 19a-19c are open. The NxMonitor 21 controls the opening and closing of each of the virtual serial ports 19a-19c in the NxFilter 12, thus the NxMonitor 21 controls the mode which the NxFilter 12 operates by selecting which of the virtual serial ports 19a-19c to open.

The NxFilter 12 is further provided with a control port 23 which can receive information with regards to the wireless network device 3; such as, for example, information regarding the status of the wireless network device 3 or the type of the wireless network device 3. This information is communicated to the NxMonitor 21. For example, the control port 23 can receive information regarding changes in the wireless network device 3, such as information as to whether the wireless network device 3 has been added or removed from an external port of the mobile terminal; the type of the wireless network device 3 which has been added to the external port of the mobile terminal; and/or information as to whether the wireless network device 3 is online or offline. This information may be communicated to the NxMonitor 21. Based on this information the NxMonitor 21 can decide in which mode to put the NxFilter 12; for example, if the control port 23 indicates the type of the wireless network device 3 and the NxMonitor 21 identifies that this particular type of wireless network device 3 is not to be monitored, then the NxMonitor 21 can configure the NxFilter 12 such that it does not intercept communication sent from the dashboard 5 which is destined for that wireless network device 3.

The NxMonitor 21 may be an OS application. The NxMonitor 21 is configured to receive data which the NxFilter 12 has intercepted, via the AuxPorts 19b, DevPort 19a and NetPort19c, when these ports are open. In particular NxMonitor 21 receives commands which were sent by the dashboard 5 to the device driver 7 but which were intercepted by the NxFilter 12, through the AuxPorts 19b. The NxMonitor 21 is configured to send responses to the dashboard 5 via the AuxPorts 19a. The NxMonitor 21 receives intercepted IP traffic data from the NxFilter 12 via NetPorts 19c. The NxMonitor 21 can send commands to the device driver 7, and receive responses from the device driver 7, via DevPorts 19a. The NxMonitor 21 can receive IP traffic data which the NxFilter 12 has intercepted, via NetPorts 19c. Of course each of AuxPorts 19a, DevPorts 19a and NetPorts 19c must be open before they can pass data.

The NxMonitor 21 can control which of the ports 19a-c to open on the basis of the information it receives from the control port 23. All the data received by the NxMonitor 21 can be used to determine the quality of experience experienced by a user of the wireless telecommunication network. The NxMonitor 21 supports passive monitoring of the wireless network device; supports device active monitoring; updates configuration from servers and uploads monitoring logs to a server.

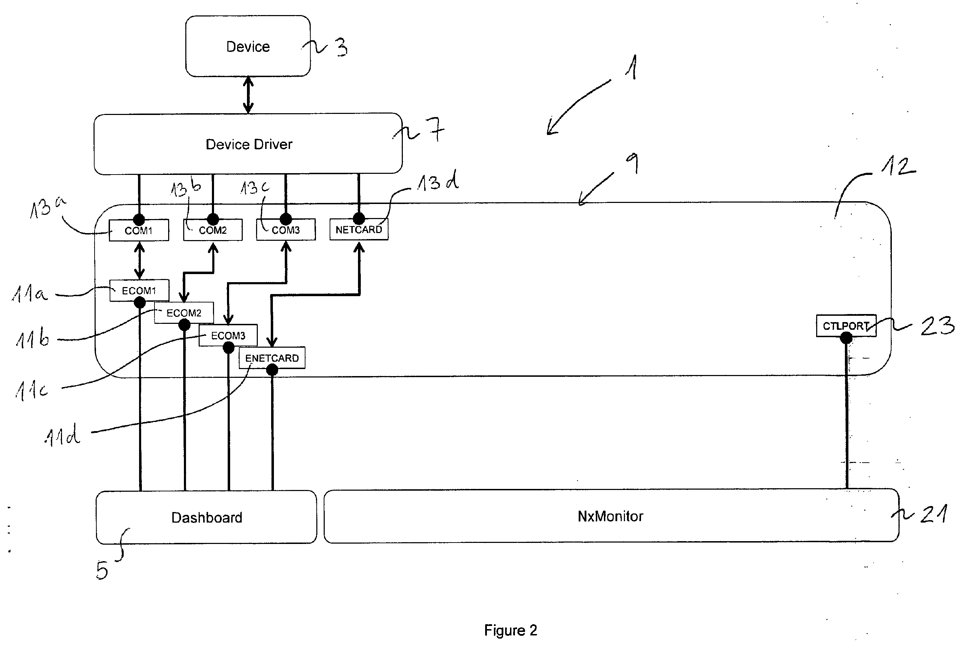

Figures 2-6 illustrate the various modes of operation of the system 1 shown in figure 1.

Figure 2 illustrates the system 1 when in full pass-through operation mode. In the full pass-through operation mode NxFilter 12 does not intercept any commands which are sent from the dashboard 5 to the device driver 7 and therefore the NxMonitor 21 does not monitor communication between the dashboard 5 and device driver 7. The full pass-through mode of operation indicates that the system 1 can be configured to monitor selected predetermined types of device only. Thus, it is possible to configure the system 1 so that it does not in any way affect communication between the dashboard 5 and chosen wireless network devices 3 i.e. the system 1 can be configured to "ignore" predetermined wireless network devices 3 which may be connected to an external port of the mobile terminal.

In the example illustrated in figure 2 the control port 23 has detected the type of wireless network device 3 which has been connected to an external port on the mobile terminal. Information regarding the type of the wireless network device 3 is communicated to the NxMonitor 21. Based on this information the NxMonitor 21 has recognised that the wireless network device 3 is a device whose performance is not to be monitored, accordingly the NxMonitor 21 did not open any of the serial ports 19a-19c in the NxFilter 12 and so the NxFilter does not operate to intercept any communication between the dashboard 5 and said wireless network device 3. The full pass-through operation mode would be also applied when NxMonitor 21 is not in execution.

It is possible that a number of wireless network devices 3 are connected to the mobile terminal; in this case the system 1 can operate in full pass-through mode for the wireless network devices 3 whose performance is not to be monitored and can operate in another modes for the other wireless network devices 3 whose performance are to be monitored.

In the full pass-through mode commands generated in the dashboard module 5 enter the NxFilter 12 via the relevant dashboard port 11a-11d in the dashboard module 5; from there the commands are passed directly to the relevant device port 13a-13d. From the device port 13a-13d the commands are passed to the device driver via the communication channels (14a,14b,14c) which operate the wireless network device 3, so that wireless network device 3 carries out a task according to the command.

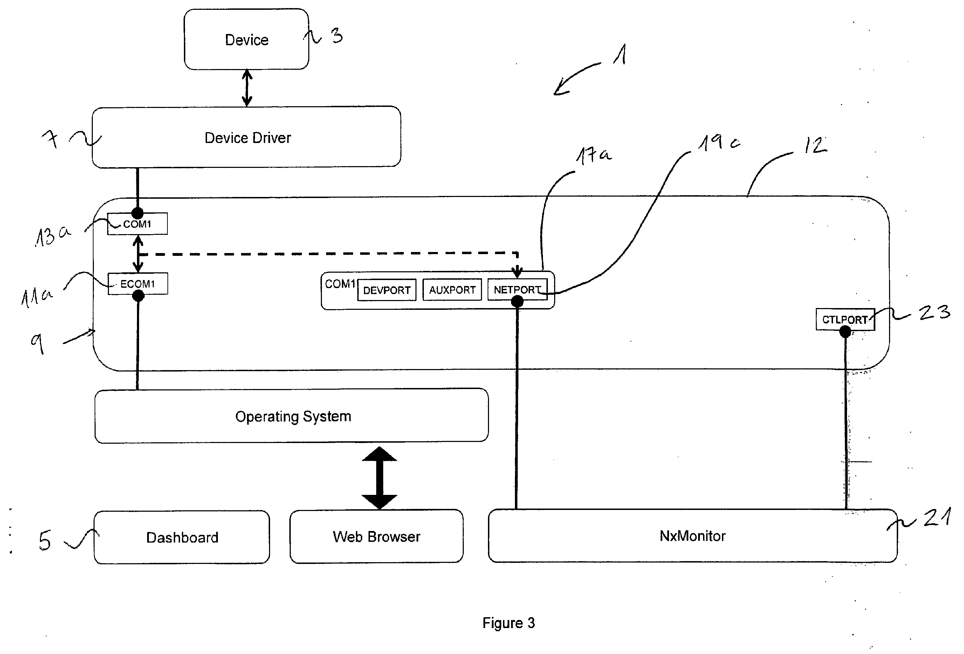

Figure 3 illustrates the NxFilter 12 operating in IP traffic monitor mode. In this mode the IP data traffic flow communicated between the wireless network and the operating system, is intercepted by the NxFilter 12. The NxFilter 12 may make copy of the IP traffic and send this copy to the NxMonitor 21 via the NetPort 19c in NxMonitor port 17a. It should be noted that in this case the NxFilter 12 does not intercept the IP traffic by redirecting the IP traffic, rather the NxFilter 12 intercepts this IP traffic by viewing the IP traffic and optionally making a copy of the IP traffic. The copy of the IP traffic is used in the NxMonitor 21 to monitor IP traffic and to determine quality of experience by matching it to other relevant quality of experience KPls (Key Performance Indicators).

The IP traffic monitor mode could for example, be used to monitor the number of bits per second in the IP traffic; the number of bits per second may be indicative of the size of the bandwidth which is available to the wireless network device 3. Typically the greater the bandwidth the greater the quality of experience; therefore the measured monitored number of bits in the IP traffic can be used to determine the quality of experience.

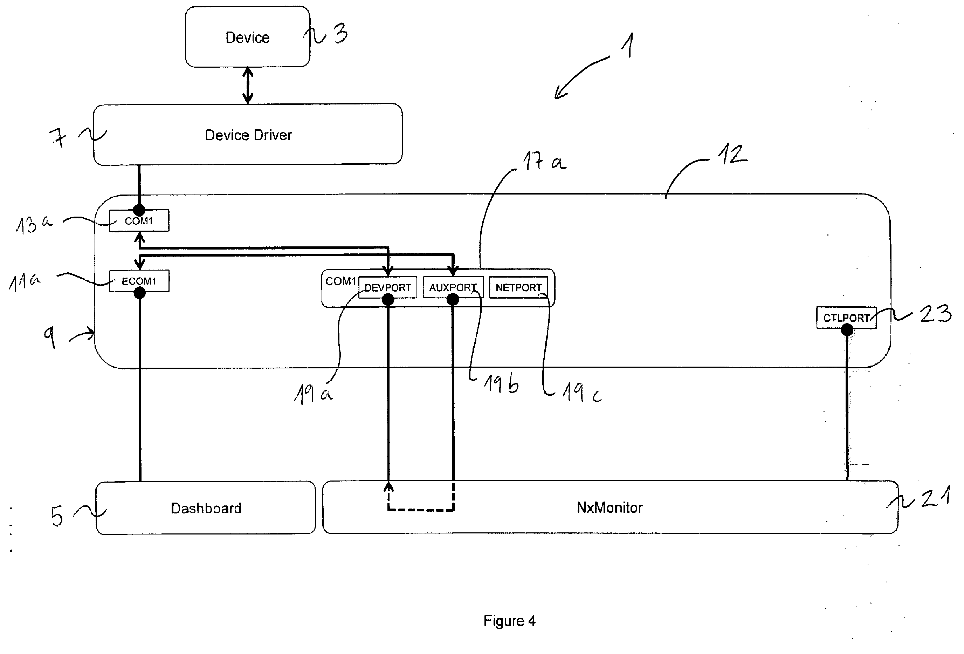

Figure 4 shows the NxFilter 12 operating in Bypass mode. In this mode the NxMonitor 21 has opened the DevPort 19a and AuxPort 19b to put the NxFilter into Bypass mode. With the DevPort 19a and AuxPort 19b opened, the Nxfilter 12 can send and receive communication to and from the wireless network device 3 and can send and receive communication to and from the dashboard 5.

Unlike the IP traffic mode, in the Bypass mode commands which are being communicated from the dashboard 5 to the device driver 7 are not simply intercepted by viewing and copying the commands, rather the commands are intercepted by redirecting the commands using NxFilter 12 to the AuxPort 19b, wherein they are passed to the NxMonitor 21.

When the NxMonitor 21 receives a redirected command it decides how the command should be processed. It may decide to block the command, send it directly to device driver 7, or it could add its own commands (e.g. AT commands) to said command to form a compound command and then forward the compound command to the device driver 7. The commands received by the NxMonitor 21 may be used to determine the quality of experience. By redirecting the commands to pass through the virtual AuxPort 19b, the NxMonitor 21 can add additional sub-commands (e.g AT commands) to the commands it receives in order to determine the quality of experience, it can be done in harmony, sending the sub-commands at the required moment to avoid a mix of sub-command and dashboard command responses.

For example, in order to connect to the internet, a command which orders the device driver 7 to operate the wireless network device 3 to connect to a wireless telecommunication network, is generated in the dashboard 5. As the command passes from the dashboard 5 to the device driver 7, it will be redirected by the NxFilter 12 to the NxMonitor 21 via the AuxPort 19b in NxMonitor port 17a. The NxMonitor 21 logs the command and passes it to the device driver 7 via the DevPort 19a. The command may be modified by the NxMonitor 21 before passing it to the device driver 7.

Upon receiving the command from the NxMonitor 21, the device driver 7 operates the wireless network device 3 to attempt to connect to the wireless telecommunication internet network. If the wireless network device 3 fails to connect to the wireless telecommunication internet network, the device driver 7 will respond to the command indicating that connection failed. If on the other hand the wireless network device 3 is successful in connecting to the wireless telecommunication internet network, the device driver 7 will respond to the command indicating that connection was successful.

Either way the response will be sent by the device driver 7 to the NxFilter 12 via the device port 13 a and the NxFilter 12 will then pass the response to the NxMonitor 21 via DevPort 19a. The responses sent by the device driver 7 may also be sent to the dashboard via AuxPort 19b. Thus, from the point of view of the dashboard 5 and device driver 7 commands and responses are being sent and received as normal; so the NxFilter 12 and NxMonitor 21 operate in a manner which is completely transparent to the dashboard software 5. The NxFilter 12 and NxMonitor 21 therefore gather data which can be used to determine the quality of experience in a passive manner.

Since system 1 operates in a manner which is transparent to the dashboard 5 and device driver 7 the system can be used to determine the quality of experience while the wireless network device 3 is in use; for example the system can be used to determine the quality of experience while the user is connected to a wireless telecommunication network, for example the quality of experience can be determined while the user is browsing the internet. Thus, the true, actual, quality of experience, as perceived by the end user, rather than technical quality of service (as in the case of the prior art with the use of active testing), is determined.

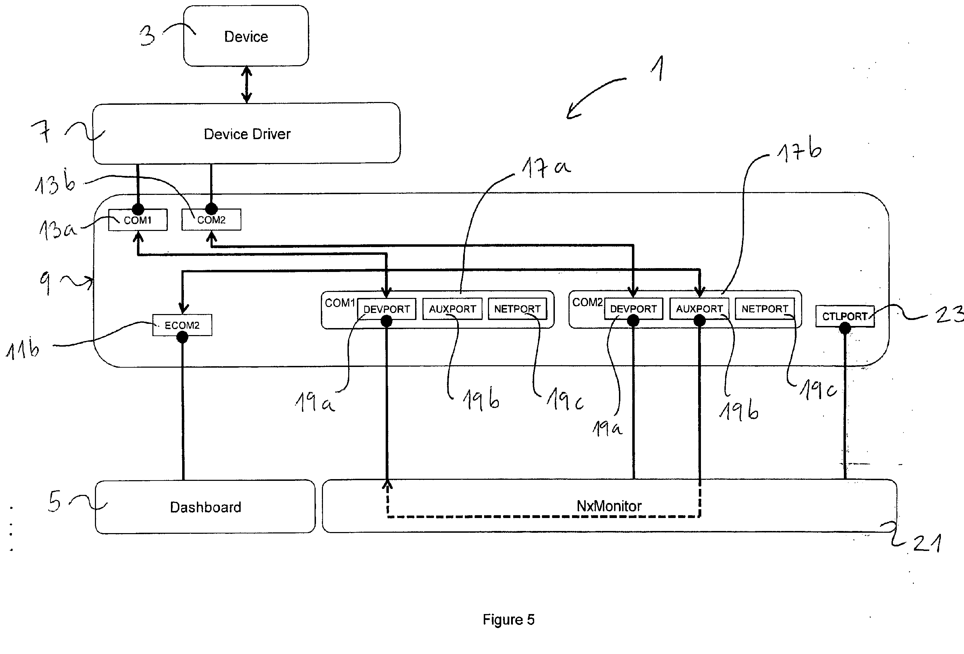

Figure 5 illustrates the system 1 when in double bypass operation mode. In this particular mode commands which are sent by the dashboard 5 and which are destined for device port 13b are redirected to another device port i.e. device port 13a, so that device port 13b may be used by NxMonitor 21 in order to obtain quality of experience key performance indicators transparently to the dashboard 5.

In the case illustrated in figure 5 the NxMonitor 21 has made device port 13b incompatible to receiving commands from the dashboard 5. The device port 13b may have been made incompatible by commands which were previously sent by the NxMonitor 21 to the device port 13b. Since the device port 13b is incompatible to receiving commands from the dashboard 5, commands sent from the dashboard 5 which are destined for device port 13b must now be redirected by the NxMonitor 21 to another device port which is compatible to receiving commands. In this case the NxMonitor 21 has chosen to redirect commands to device port 13a. The NxMonitor 21 opens the DevPort 19a and AuxPort 19b in NxMonitor Port 17b and DevPort 19a in NxMonitor Port 17a.

The NxMonitor 21 also sends a response via AuxPort 19b in NxMonitor port 17b, to the dashboard 5. The response which the NxMonitor 21 sends to the dashboard5 will be compatible to the response the dashboard 5 would have received from the device driver 7 if it was directly communicating with the device driver 7 via device port 13b. Since, from the point of view of both the dashboard 5 and device driver 7, commands and responses are being sent and received as normal, the system 1 is thus transparent to the dashboard 5 and device driver 7.

Before redirecting the command to the DevPort 19a of NxMonitor port 17a the NxMonitor 21 may decide to process the command; for example it may decide to add its own commands (e.g. AT commands) to form a compound command. The commands which are redirected by the NxFilter 12 to the NxMonitor 21 may be used to determine the quality of experience.

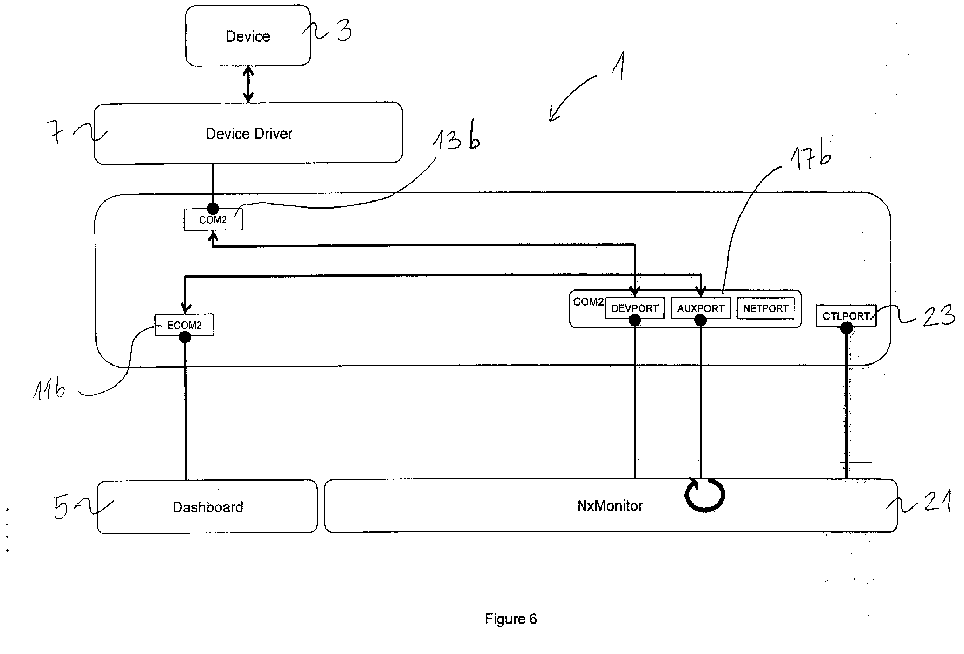

Figure 6 illustrates the system 1 when in emulation mode. In this mode the NxMonitor 21 blocks commands which are sent by the dashboard 5 which are destined for device port 13b.

In the case illustrated in figure 6 the NxMonitor has made device port 13b incompatible to receiving commands from the dashboard 5. The device port 13b may have been made incompatible by commands which were previously sent by the NxMonitor 21 to the device port 13b. Since the device port 13b is incompatible to receiving commands from the dashboard 5, commands sent from the dashboard 5 which are destined for device port 13b are blocked by the NxMonitor 21. The NxMonitor 21 opens the DevPort 19a and AuxPort 19b in NxMonitor Port 17b. Commands sent by the dashboard 5 which are destined for device port 13b are received at dashboard port 11 b. The commands received at dashboard port 11 b are filtered by the NxFilter 12 and redirected via the AuxPort 19b in NxMonitor port 17b to the NxMonitor 21.

The NxMonitor 21 recognises that the command was destined for device port 13b and blocks the command. The NxMonitor 21 provides a response to the dashboard 5 via AuxPort 19b of NxMonitor Port 17b. The response is compatible to the response that the dashboard 5 would normally receive from the device port 13b if directly communicating with the device driver 7 via device port 13b. The redirecting and blocking of the commands by NxFilter 12 and NxMonitor 21 is transparent to the dashboard 5 and device driver 7, as, from the point of view of the dashboard 5 and device driver 7 commands and responses are being sent and received as normal. Thus NxMonitor 21 emulates responses expected by the device port 13b, which have been previously made incompatible by NxMonitor 21.

The commands filtered and sent by the NxFilter 12 to the NxMonitor 21 can be used by the NxMonitor 21 to determine the quality of experience.

The NxMonitor, as described above, writes a measurement logfile of an end user session, where quality of experience key performance indicators and IP traffic information metadata is collected and sent to a server for processing.

Examples of such obtained key performance indicators can be: Signal Strength, Download Throughput, Data Retransmissions, Bit Error Rate.

When configured to be in a diagnostic mode the system 1 will operate in a manner which enables the monitor software 21 to collect relevant network performance metadata. This metadata is logged and structured so that it can be sent to a server (not shown) using a communication protocol between monitor software 21 and the server.

It will be understood that the modes outlined above have been explained in relation to communication between the dashboard 5 and a single device port 13 a-d. However it should be understood that the same modes or different modes could be implemented for some or all of the device ports 13a-d either simultaneously or exclusively.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A method for determining the quality of experience
experienced by a user of a wireless telecommunication network, comprising the steps of,
providing a user equipment having a processor unit arranged to execute an operating system, and a wireless network device connected to the user equipment;
providing a communication manager software executable by the user equipment containing software code to manage the wireless network device;
providing a filter driver for the operating system, wherein the filter driver is configured to intercept data which is being communicated between the communication manager software and the wireless network device;
providing a monitor software at user level to measure quality of experience;
providing a device driver, responsible for the interaction between the operating system and the wireless network device;
determining said quality of experience based on the data intercepted by the filter driver

2. The method according to claim 1 comprising the step of providing a filter driver which is configured to intercept data which is being communicated between the communication manager software and one or more communication channels.

3. The method according to claim 2 comprising the step of using a device driver to provide said one or more communication channels.

4. The method according to any one of the preceding claims further comprises the step of sending a response to the communication manager software, based on the data intercepted.

5. The method may further comprise the step of forwarding intercepted data to a device driver.

6. The method according to any preceding claim wherein data which is intercepted by the filter driver is one or more commands sent by the communication manager.

7. The method according to any preceding claim wherein data which is intercepted by the device driver is traffic data.

8. The method according to any preceding claim further comprising the step of adapting an existing filter driver in a user equipment so that it is configured to intercept data which is being communicated between the communication manager software and the wireless network device.

9. The method according to any preceding claim, further comprising the step of, providing a filter which can be configured to filter data which is sent by the communication manager software.

10. The method according to any preceding claim, further comprising the step of, providing a monitor which is in cooperation with the filter and which is configured to direct data.

11. The method according to any preceding claim wherein the filter driver may intercept data during a service running at the user equipment.

12. The method according to any preceding claim wherein the filter driver is configured to intercept data which is being communicated between a device driver and a wireless network device.

13. A system comprising,
a communication manager software useable by the user equipment to manage a wireless network device;
a filter driver module which is configurable to intercept data which is being communicated between the communication manager software and one or more wireless network devices so that the quality of experience experienced by a user of a wireless telecommunication network can be determined.

14. A system according to claim 13 wherein the filter driver module may be configurable to intercept data which is being communicated between a communication manager software and a device driver.

15. The system according to claim 13 or 14, wherein the filter driver module comprises a filter driver and a monitor software.
